# EUROPÄISCHE PATENTSCHRIFT

(11) **EP 1 760 390 B1**
(45) Veröffentlichungstag und Bekanntmachung des Hinweises auf die Patenterteilung: **08.05.2013**
(21) Anmeldenummer: 06012903.8
(22) Anmeldetag: 22.06.2006
(51) Int. Cl.: F17C 13/12, F17C 13/02, B60K 28/14, B60P 3/32, B60R 21/01

(54) **Vorrichtung und Verfahren zur Absperrung einer Flüssiggas-Anlage für Fahrzeuge im Falle eines Unfalls**
Device and process for closing a liquefied gas system for vehicle in case of an accident
Dispositif et procédé pour fermer un système de gaz liquéfié d'un véhicule en cas d'accident

(30) Priorität: 23.08.2005 DE 102005040024
(43) Veröffentlichungstag der Anmeldung: 07.03.2007
(73) Patentinhaber: Cavagna Group S.p.A., 25012 Viadana die Calvisano BS (IT); Toptron GmbH, 58706 Menden (DE)
(72) Erfinder: Cramer, Wilhelm, 59846 Sundern (DE)
(74) Vertreter: Zech, Stefan Markus

(56) Entgegenhaltungen:
- EP-A- 0 398 307
- EP-A- 1 356 973
- WO-A-03/062022
- US-A- 3 833 084
- US-A- 4 319 550
- US-A- 5 797 111
- US-A1- 2003 139 866

## Beschreibung

Die Erfindung betrifft eine Flüssiggas-Anlage und ein Verfahren zur Sicherheitsabsperrung einer Flüssiggas-Anlage für Fahrzeuge und/oder Fahrzeuganhänger zur Vermeidung einer ungewollten Freisetzung von Gas im Falle eines Unfalles des Fahrzeugs und/oder Fahrzeuganhängers.

Flüssiggas-Anlagen finden sich in zahlreichen Fahrzeugen und Fahrzeuganhängern. Die Begriffe sind dabei weit gefasst zu verstehen. Als Beispiele für Fahrzeuge seien Kraftfahrzeuge wie Wohnmobile oder Busse genannt, aber auch Boote fallen hierunter. Typisches Beispiel für einen Fahrzeuganhänger ist der Wohnwagen (Caravan).

Flüssiggas (auch: LPG Liquid Petroleum Gas, Flaschengas) wird in diesen Fahrzeugen bzw. Fahrzeuganhängern für verschiedene Funktionen eingesetzt. Im Mittelpunkt steht zumeist das Heizen der Innenräume und/oder von Wasser (Flüssiggas-Heizanlage). Weitere Funktionen sind das Kochen und/oder das Betreiben eines Kühlschrankes sowie gegebenenfalls weiterer Geräte mit Gas.

Dementsprechend sind die Fahrzeuge bzw. Fahrzeuganhänger mit einer Gasanlage ausgerüstet. Die Gasverbraucher sind dabei in der Regel innerhalb der Haupträume des Fahrzeugs bzw. Fahrzeuganhängers angeordnet, wohingegen die Gasvorratsbehälter, in der Regel eine oder mehrere Gasflaschen, außerhalb dieser Haupträume untergebracht sind, beispielsweise in einem speziellen Gasflaschenkasten. Üblicherweise ist der Lagerbereich der Gasvorratsbehälter nur von außerhalb des Fahrzeugs bzw. Fahrzeuganhängers zugänglich, beispielsweise durch Öffnen der Klappe eines Gasflaschenkastens. Zur Gasdruckregelung ist in den Gasanlagen ein Druckregler vorgesehen.

Durch die Europäische Richtlinie 2004/78/EG ist vorgegeben, dass in einem Kraftfahrzeug, beispielsweise einem Wohnmobil, mit installierter LPGbetriebener Heizanlage, die auch während der Fahrt betrieben werden kann, das LPG-Verbrennungsheizgerät und sein Gasversorgungssystem folgende Anforderung erfüllen muss (Zitat aus Richtlinie 2004/78/EG):

Anhang I, Teil B, Punkt 1.1.6. der Richtlinie 2004/78/EG "Wird LPG aus einem fest installierten Behälter oder aus tragbaren Flaschen in gasförmigem Zustand entnommen, so ist durch geeignete Vorkehrungen sicherzustellen, dass
1.1.6.1. kein flüssiges LPG in den Druckregler oder das LPG-Verbrennungsheizgerät gelangen kann,
1.1.6.2. bei einem Unfall kein LPG ungewollt austreten kann. Ist der Druckregler an den Behälter oder die tragbare Flasche angebaut, so ist unmittelbar hinter dem Druckregler eine Einrichtung zu installieren, die das Gas absperrt. Ist der Druckregler vom Behälter oder von der Flasche abgesetzt, ist eine Absperreinrichtung unmittelbar vor der vom Behälter oder der Flasche abgehenden Leitung und eine zweite nach dem Druckregler zu installieren."

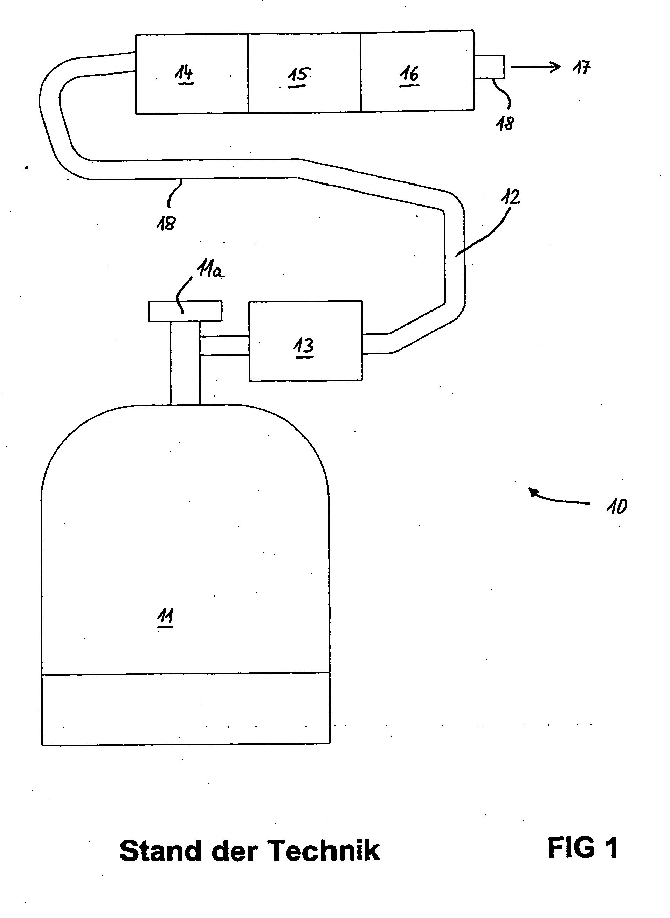

Es ist bekannt, die Vorgaben dieser Richtlinie durch Auslegung einer Flüssiggas-Anlage, wie sie in FIG 1 schematisch dargestellt ist, zu erfüllen.

FIG 1 zeigt schematisch eine Flüssiggas-Anlage 10 für Fahrzeuge und/oder Fahrzeuganhänger gemäß dem Stand der Technik. Die Flüssiggas-Anlage 10 umfasst einen Gasvorratsbehälter 11, und zwar konkret eine Gasflasche 11 mit einem Flaschenventil 11a. Direkt an die Gasflasche 11 ist eine Schlauchbruchsicherung 13 montiert. Ausgehend von dieser Schlauchbruchsicherung 13 führt ein Gashochdruckschlauch 12 als Gasleitung 18 zu einem Druckregler 14, der beispielsweise an einer Wand befestigt sein kann. Dem Druckregler 14 ist ein Strömungswächter 15 nachgeschaltet, der bei Überschreitung eines vorgegebenen Gasvolumenstroms die Gaszufuhr absperrt (abschaltet). Der Strömungswächter 15 ist dabei so ausgelegt, dass er nach Auslösung, d.h. Absperrung der Gaszufuhr aufgrund eines überhöhten Gasvolumenstroms, manuell über einen Betätigungsknopf zurückgesetzt werden muss.

Dem Strömungswächter 15 wiederum ist ein Testpunkt 16 nachgeschaltet. Dieser Testpunkt 16 ermöglicht die Überprüfung der Dichtigkeit der Flüssiggas-Anlage 10, ohne dass hierzu irgendwelche Teile demontiert oder abgedichtet werden müssen. Die Funktionselemente Druckregler 14, Strömungswächter 15 und Testpunkt 16 können in einem gemeinsamen Bauteil zusammengefasst sein. Den Funktionselementen Druckregler 14, Strömungswächter 15 und Testpunkt 16 folgen gasströmungstechnisch in der Figur nicht mehr dargestellte Gasverbraucher 17, die über Gasleitungen 18, insbesondere über Niederdruckschläuche (nicht dargestellt), angeschlossen sind.

Druckregler 14, Strömungswächter 15 und Testpunkt 16 werden räumlich höher als das Flaschenventil 11a der Gasflasche 11 angeordnet, beispielsweise an einer Fahrzeugwand eingebaut. Dadurch soll ein Eindringen von flüssigem Gas in diese Funktionselemente 14, 15, 16 möglichst verhindert werden.

Die Schlauchbruchsicherung 13 ist wie der Strömungswächter 15 so ausgebildet, dass sie bei Überschreitung eines vorgegebenen Gasvolumenstroms (Auslöse-Volumenstrom, auch: Nenn-Volumenstrom) die Gaszufuhr absperrt, und dass sie nach Auslösung, beispielsweise durch ein Abreißen des Gashochdruckschlauches 12, manuell zurückgesetzt werden muss.

Diese bekannte Anordnung hat den Nachteil, dass auch ein nicht vorgesehenes Auslösen der Schlauchbruchsicherung 13 möglich ist, beispielsweise wenn die Flüssiggas-Anlage 10 in Betrieb genommen wird und nach dem ersten Öffnen des Flaschenventils 11a zunächst der Druck in der Anlage 10 aufgebaut werden muss. Wird in diesem Fall der Auslöse-Volumenstrom überschritten, so erfolgt ebenfalls die Auslösung der Schlauchbruchsicherung 13.

Von Nachteil ist auch, dass die Auslösung der Schlauchbruchsicherung 13 insbesondere bei "kleinen" Undichtigkeiten von dem in der Gasflasche 11 bestehenden Gasdruck abhängt. Es ist daher möglich, dass ein Unfall des Fahrzeugs bzw. Fahrzeuganhängers eine "kleine" Undichtigkeit in der Flüssiggas-Anlage 10 verursacht, der dadurch hervorgerufene Volumenstrom jedoch den Auslöse-Volumenstrom nicht überschreitet und somit trotz Unfall und Undichtigkeit die Schlauchbruchsicherung 13 nicht auslöst und somit große Gasmengen austreten können.

Ein weitere Nachteil der Flüssiggas-Anlage 10 gemäß dem Stand der Technik ergibt sich hinsichtlich des dem Druckregler 14 auf dessen Niederdruckseite nachgeschalteten Strömungswächters 15. Der Strömungswächter 15 löst ebenfalls bei Überschreiten eines bestimmten Volumenstroms aus. Damit dieser Volumenstrom beim Abreißen der Gasleitung auch tatsächlich überschritten wird, müssen unter Umständen die Querschnitte und Längen der Leitungen angepasst, geändert bzw. berücksichtigt werden. Daher werden verschiedene Strömungswächter eingebaut, die sich in ihrem Auslösepunkt unterscheiden. Entscheidender Nachteil ist jedoch, dass die Auslösung nur erfolgt, wenn die Gasleitung total abreißt und somit der Auslösevolumenstrom des Strömungswächters überschritten wird. Sollte hingegen bei einem Unfall des Fahrzeugs bzw. Fahrzeuganhängers die Gasleitung nicht ganz abreißen, sondern nur eine Undichtigkeit auftreten, die nicht die Überschreitung des Auslösevolumenstroms und damit des Auslösepunktes bewirkt, so löst der Strömungswächter 15 trotz Unfall und Undichtigkeit nicht aus und es tritt unverbranntes Gas aus.

Aus den Schriften EP 1 356 973 A1, EP 0 398 307 A1, US 3 833 084 A, US 5 797 111 A, WO 03/062022 A2, US 2003/0139866 A1 sowie US 4 319 550 A sind Vorrichtungen bekannt, um ein Auslaufen eines flüssigen Kraftstoffes, wie Benzin, aus einem Kraftstofftank durch eine Kraftstoffleitung im Falle eines Unfalls zu vermeiden. Diese bekannten Vorrichtungen sind jedoch für eine Flüssiggas-Anlage nicht geeignet.

Es ist Aufgabe der Erfindung, eine Flüssiggas-Anlage und ein Verfahren anzugeben, mit der die vorstehend angesprochenen Nachteile beim Stand der Technik vollständig oder zumindest teilweise überwunden werden.

Diese Aufgabe wird hinsichtlich der Vorrichtung durch eine Flüssigkeits-Anlage mit den Merkmalen des Patentanspruchs 1 und hinsichtlich des Verfahrens durch die Merkmale des Anspruchs 12 gelöst. Vorteilhafte Ausgestaltungen und Weiterbildungen ergeben sind jeweils aus den abhängigen Ansprüchen.

Nach Anspruch 1 wird eine Flüssiggas-Anlage mit einem Druckregler für Fahrzeuge und/oder Fahrzeuganhänger, bei der ein oder mehrere Gasvorratsbehälter über eine oder mehrere Gasleitungen mit einem oder mehreren Gasverbrauchern verbunden oder verbindbar sind, mit einer Gassicherheitsabsperreinrichtung zur Vermeidung einer ungewollten Freisetzung von Gas, insbesondere unverbranntem Gas, im Falle eines Unfalles des Fahrzeugs und/oder Fahrzeuganhängers angegeben, die umfasst
a) ein elektromagnetisches Gasventil zur Gaszufuhr-Absperrung,
b) eine Elektronikeinheit zur Ansteuerung des elektromagnetischen Gasventils, und
c) mindestens einen Sensor zur Ermittlung eines Unfalls des Fahrzeugs und/oder Fahrzeuganhängers, wobei der Sensor zur Weitergabe einer Unfallmeldung mit der Elektronikeinheit verbunden ist.

Gemäß einer ersten Alternative ist das elektromagnetische Gasventil gasströmungstechnisch einem Druckregler nachgeschaltet. Der Druckregler ist in einer Flüssiggas-Anlage erforderlich, um den Gasdruck vom Hochdruck im Gasvorratsbehälter auf den Arbeitsdruck (Niederdruck) zu reduzieren. Das Gasventil ist in diesem Fall im Niederdruckbereich der Gasanlage angeordnet. Von Vorteil ist dabei, wenn das elektromagnetische Gasventil direkt am Druckregler angebracht (montiert, installiert) ist, d.h. im Wesentlichen ohne Zwischenschaltung von Gasleitungen. Dies ist insbesondere dann erforderlich, wenn der Druckregler direkt an einem Gasvorratsbehälter angebracht (montiert, installiert) oder eine entsprechende Anbringung vorgesehen ist. Durch diese Anordnung werden die diesbezüglichen, eingangs angesprochenen Vorgaben der Europäischen Richtlinie 2004/78/EG erfüllt.

Gemäß einer zweiten Alternative ist das elektromagnetische Gasventil gasströmungstechnisch einem Druckregler vorgeschaltet. In diesem Fall ist das Gasventil in den Hochdruckbereich der Gasanlage integriert. Das Gasventil kann hierbei direkt am Gasvorratsbehälter angebracht (montiert) sein, und der Druckregler ist dann zweckmäßigerweise über eine Hochdruckleitung (Hochdruckschlauch) mit dem Gasventil verbunden. Es kann aber auch vorgesehen sein, den Druckregler direkt an dem Gasventil anzubringen, wobei hierbei dann sinnvollerweise das Gasventil über eine Hochdruckleitung (Hochdruckschlauch) mit dem Gasvorratsbehälter verbunden ist bzw. verbindbar ist.

Das elektromagnetische Gasventil ist dabei hinsichtlich der Gasströmung zwischen Gasvorratsbehältern und Gasverbrauchern der Flüssiggas-Anlage angeordnet, d.h. in den Gasleitungsbereich integriert bzw. diesem Bereich vor oder nachgeschaltet. Es ist dazu bestimmt, bei entsprechender Ansteuerung die Gaszufuhr von den Gasvorratsbehältern zu den Gasverbrauchern abzusperren, d.h. zu unterbrechen.

Elektronikeinheit und Sensor können getrennte Bauteile bzw. Baugruppen sein, die über eine elektrische Verbindung miteinander verbunden sind. Es ist aber ebenso möglich, dass der Sensor in die Elektronikeinheit integriert ist, das heißt ein Bestandteil der Elektronikeinheit ist, und damit die Weitergabe der Unfallmeldung vom Sensor an die Elektronikeinheit innerhalb der Elektronikeinheit erfolgt, das heißt Elektronikeinheit und Sensor sind intern miteinander verbunden.

Die Vorteile dieser Flüssiggas-Anlage liegen insbesondere darin, dass die Sicherheitsabsperrung der Gaszufuhr durch elektromagnetisches Gasventil und Elektronikeinheit völlig unabhängig von irgendwelchen Volumenströmen erfolgt. Vielmehr signalisieren spezielle Sensoren einen Unfall des Fahrzeugs bzw. Fahrzeuganhängers an die Steuereinheit. Diese löst umgehend ein Absperren der Gaszufuhr durch entsprechende Ansteuerung des elektromagnetischen Gasventils aus. Im Falle eines Unfalls wird somit immer die Gaszufuhr abgeschaltet, ohne dass irgendwelche Volumenströme überschritten werden müssen. Somit ist im Unterschied zum eingangs beschriebenen Stand der Technik ausgeschlossen, dass bei einem kleinen Leck aufgrund eines Unfalls unverbranntes Gas austritt. Die Vorgaben der eingangs zitierten Europäischen Richtlinie 2004/78/EG werden durch die Sicherheitsabsperreinrichtung nach der Erfindung hervorragend erfüllt.

Ein weiterer Vorteil der Erfindung liegt darin, dass es nunmehr nicht mehr erforderlich ist, die Gasinstallation im Fahrzeug bzw. Fahrzeuganhänger so auszulegen, dass die Auslösevolumenströme von Schlauchbruchsicherung bzw. Strömungswächter überschritten werden. Da auf derartige Bauteile verzichtet werden kann, erhält der Konstrukteur wesentlich mehr Freiheitsgrade bei der Ausgestaltung der Gasinstallation. Dadurch ist beispielsweise auch der Gasbetrieb eines Kühlschrank und/oder weiterer Gasgeräte während der Fahrt möglich, ohne die Gaszuleitungen zu diesen Geräten hinsichtlich der Funktion von Schlauchbruchsicherung und Strömungswächter in geeigneter Weise auslegen zu müssen.

Eine zweckmäßige Weiterbildung sieht vor, dass das elektromagnetische Gasventil bei fehlender elektrischer Energieversorgung die Gaszufuhr in der Flüssiggas-Anlage absperrt. Mit anderen Worten: Liegt kein Strom am elektromagnetischen Gasventil an, befindet es sich in einem Sperrzustand bzw. geht sofort in diesen über, die Gaszufuhr ist gesperrt.

Die direkte Anbringung des Druckreglers am Gasvorratsbehälter hat unter anderem den Vorteil, dass dadurch ein aufwendiger und teurer Hochdruckschlauch zwischen Gasvorratsbehälter und Druckregler entfällt. Auch entfällt die sonst zur Erfüllung der Normvorgaben erforderliche Schlauchbruchsicherung am Ausgang des Gasvorratsbehälters, vor der abgehenden Leitung.

Eine zweckmäßige Ausführungsform der Flüssiggas-Anlage sieht vor, dass das elektromagnetische Gasventil an eine in das Fahrzeug und/oder den Fahrzeuganhänger eingebaute Batterie angeschlossen oder anschließbar ist. Hierzu ist das Gasventil so ausgelegt, dass die Batterie nicht nennenswert belastet wird. Von Vorteil ist hierbei die Anordnung des Gasventils im Niederdruckbereich, d.h. wie oben beschrieben nach dem Druckregler, da in diesem Fall der Energieverbrauch des Ventils zum Offenhalten geringer als bei einem für einen Hochdruckbereich ausgelegten Ventil ist.

Bevorzugt werden als Sensoren zur Ermittlung eines Unfalls des Fahrzeugs und/oder Fahrzeuganhängers Beschleunigungssensoren und/oder Neigungssensoren eingesetzt. Beschleunigungs- und Neigungssensoren sind aus dem Automobilbau bekannt. Ein Beschleunigungssensor erkennt ein für einen Unfall typisches Abbremsen des Fahrzeugs bzw. Fahrzeuganhängers, ein Neigungssensor erkennt eine übermäßige Schieflage bzw. ein Umkippen des Fahrzeugs. Die entsprechenden Informationen werden an die Elektronikeinheit weitergegeben, die dann die Gaszufuhr vom Gasvorratsbehälter an die Gasverbraucher durch entsprechende Ansteuerung des elektromagnetischen Gasventils unterbricht, beispielsweise bei entsprechender Auslegung des Ventils durch einfaches Abschalten des elektromagnetischen Ventils. Dem Neigungssensor kommt besondere Bedeutung zu, da ein durch ihn veranlasstes Absperren der Gaszufuhr einen Austritt von Gas im flüssigen Zustand, was beim Umkippen des Fahrzeugs möglich wäre, verhindert.

Bei einer besonders zweckmäßigen Ausführungsform ist ein vorzugsweise im Inneren des Fahrzeugs oder Fahrzeuganhängers angeordneter Schalter zum manuellen Abschalten der Gasversorgung vorgesehen. Beispielsweise kann mit dem Schalter die Energieversorgung des elektromagnetischen Gasventils abgeschaltet werden, was bei entsprechender Auslegung des Ventils automatisch zur Absperrung der Gaszufuhr durch das Ventil führt. Bei Anordnung des Schalters im Inneren (Innenraum) des Fahrzeugs bzw. Fahrzeuganhängers kann somit die gewollte Absperrung der Gasversorgung bequem vom Innenraum aus erfolgen, auch wenn, was üblicherweise der Fall ist, Gasvorratsbehälter und Absperreinrichtung nur von außen, beispielsweise durch Öffnen eines Gasflaschenkastens, und nicht vom Innenraum aus zugänglich sind.

Eine vorteilhafte Weiterbildung ist auch, wenn zusätzlich ein oder mehrere weitere Sensoren vorgesehen sind, insbesondere Gassensoren und/oder Rauchmelder, die weitere Gefahrensituationen ermitteln, insbesondere Gasaustritt und/oder Brand im Fahrzeug und/oder Fahrzeuganhänger, wobei die Sensoren zur Weitergabe einer Gefahrmeldung mit der Elektronikeinheit verbunden sind. Auch in diesem Fall veranlasst die Elektronikeinheit eine Sicherheitsabschaltung der Gaszufuhr über das elektromagnetische Gasventil.

Bevorzugt ist eine Ausführung der Flüssiggas-Anlage, bei der Elektronikeinheit und/oder Sensoren so ausgelegt sind, dass im Fehlerfall, beispielsweise bei defekten Bauteilen, nicht angeschlossenen Sensoren oder Ausfall der Energieversorgung, automatisch das elektromagnetische Gasventil die Gaszufuhr absperrt und damit die Flüssiggas-Anlage einen sicheren Betriebszustand einnimmt.

Das gemäß Anspruch 12 vorgesehene Verfahren zur Sicherheitsabsperrung einer Flüssiggas-Anlage für Fahrzeuge und/oder Fahrzeuganhänger, insbesondere einer Flüssiggas-Anlage entsprechend den vorstehenden Darlegungen, zur Vermeidung einer ungewollten Freisetzung von Gas im Falle eines Unfalles des Fahrzeugs und/oder Fahrzeuganhängers sieht vor, dass
a) ein Unfall des Fahrzeugs und/oder Fahrzeuganhängers mit mindestens einem Sensor ermittelt wird,
b) der Sensor den Unfall an eine Elektronikeinheit meldet,
c) die Elektronikeinheit im Fall einer Unfallmeldung ein in die Flüssiggas-Anlage integriertes elektromagnetischen Gasventil derart ansteuert, dass das Gasventil einen Gasaustritt aus einem an die Flüssiggas-Anlage angeschlossenen Gasvorratsbehälter absperrt, wobei das elektromagnetische Gasventil gasströmungstechnisch einem Druckregler nachgeschaltet oder vorgeschaltet ist.

Bevorzugt wird zur Durchführung des Verfahrens die vorstehend erläuterte, erfindungsgemäße Flüssiggas-Anlage verwendet.

Die Vorteile des Verfahrens ergeben sich ebenfalls aus den vorstehenden Darlegungen zur Flüssiggas-Anlage.

Bevorzugt ist bei diesem Verfahren ferner vorgesehen, dass
a) das elektromagnetische Gasventil derart ausgelegt ist, dass es bei fehlender elektrischer Energie die Gaszufuhr in der Flüssiggas-Anlage absperrt, und
b) die Elektronikeinheit im Falle einer Unfallmeldung die elektrische Energieversorgung des elektromagnetischen Gasventils unterbricht.

Die Ansteuerung des elektromagnetischen Ventils durch die Elektronikeinheit besteht in diesem Fall schlicht im Abschalten der Energieversorgung des Ventils.

Ergänzend sei angemerkt, dass die von der Sicherheitsabsperreinrichtung umfasste Elektronikeinheit auch weitere Aufgaben übernehmen kann, insbesondere im Falle eines Unfalls des Fahrzeugs bzw. Fahrzeuganhängers. Beispielsweise kann bei Registrierung eines Unfalls durch die Sensoren und Meldung an die Elektronikeinheit durch die Elektronikeinheit auch die elektrische Verbindung zur Aufbaubatterie des Fahrzeugs bzw. Fahrzeuganhängers unterbrochen werden.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Es zeigen
- FIG 1: schematisch eine bereits vorstehend beschriebene Flüssiggas-Anlage gemäß dem Stand der Technik, und
- FIG 2: schematisch ein Ausführungsbeispiel für eine Flüssiggas-Anlage mit einer Sicherheitsabsperreinrichtung nach der Erfindung.

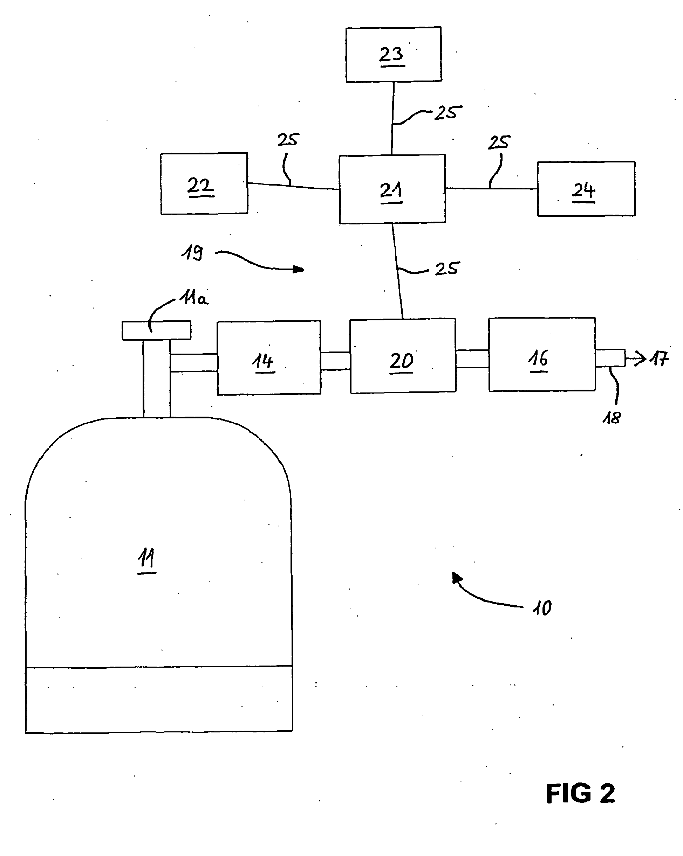

Einander entsprechende Teile sind in FIG 1 und FIG 2 mit den gleichen Bezugszeichen versehen.

FIG 1 stellt eine Flüssiggas-Anlage 10 gemäß dem Stand der Technik dar und wurde bereits in der Beschreibungseinleitung erläutert.

FIG 2 zeigt schematisch ein Ausführungsbeispiel für eine Flüssiggas-Anlage 10 mit einer Sicherheitsabsperreinrichtung 19 nach der Erfindung. Diese Flüssiggas-Anlage 10 umfasst als Gasvorratsbehälter eine Gasflasche 11 mit einem Flaschenventil 11a. Direkt, d.h. im Wesentlichen ohne Gasleitungen (die Darstellung ist nur schematisch), an das Flaschenventil 11a der Gasflasche 11 ist ein Druckregler 14 montiert. Dadurch entfällt eine Schlauchbruchsicherung und ein aufwendiger Hochdruckschlauch (vgl. FIG 1 zum Stand der Technik, Bezugszeichen 12 und 13). Dem Druckregler 14 wiederum ist gasströmungstechnisch direkt (die Darstellung ist auch hier nur schematisch) ein elektromagnetisches Gasventil 20 nachgeschaltet. Hieran schließt sich ein Testpunkt 16 zur Prüfung der Dichtigkeit der Flüssiggas-Anlage an. Dieser Testpunkt 16 kann auch in das elektromagnetische Ventil 20 integriert sein. Hierauf folgen gasströmungstechnisch in der Figur nicht mehr dargestellte Gasverbraucher 17, die über Gasleitungen 18, insbesondere über einen oder mehrere Niederdruckschläuche (nicht dargestellt), angeschlossen sind.

Das elektromagnetische Gasventil 20 ist so ausgelegt, dass es bei fehlender elektrischer Energieversorgung (beispielsweise bei Ausschalten oder Ausfall der Energieversorgung) automatisch die Gaszufuhr zwischen Gasflasche 11 und Gasverbrauchern 17 absperrt. Zur Energieversorgung wird das Gasventil 20 an eine im Fahrzeug bzw. Fahrzeuganhänger eingebaute Batterie angeschlossen. Da das Gasventil 20 in einem Niederdruckbereich der Flüssiggas-Anlage 10, d.h. dem Druckregler 14 nachgeschaltet, integriert ist, lässt es sich derart dimensionieren, dass seine Leistungsaufnahme die Batterie kaum bzw. nicht nennenswert belastet.

Das elektromagnetische Gasventil 20 ist über eine elektrische Verbindung 25 mit einer Elektronikeinheit 21 verbunden. Die Elektronikeinheit 21 ist bestimmt zur Ansteuerung des elektromagnetischen Gasventils 20. Die Elektronikeinheit 21 sorgt im Falle eines Unfalls des Fahrzeugs bzw. Fahrzeuganhängers für ein Abschalten des elektromagnetischen Gasventils 20, d.h. die Energieversorgung des Gasventils 20 wird unterbrochen, wodurch das Gasventil die Gaszufuhr absperrt.

Zur Ermittlung eines Unfalls ist die Elektronikeinheit 21 über weitere elektrische Verbindungen 25 mit einem Beschleunigungssensor 22 und einem Neigungssensor 23 verbunden. Bei dem Beschleunigungssensor 22 handelt es sich um ein aus dem Automobilbau bekanntes Bauteil, das in der Lage ist, einen Fahrzeugunfall sicher zu erkennen. Der Beschleunigungssensor 22 meldet einen Unfall an die Elektronikeinheit 21, über die dann das elektromagnetische Gasventil 20 wie vorbeschrieben angesteuert und damit die Gaszufuhr abgesperrt wird.

Der Neigungssensor 23 erkennt eine übermäßige Schieflage des Fahrzeugs bzw. Fahrzeuganhängers, wie sie beispielsweise bei Unfällen häufig vorkommt, und meldet dies an die Elektronikeinheit 21. Die Elektronikeinheit 21 schaltet dann wie bereits erläutert das elektromagnetische Gasventil 20 ab und sperrt damit die Gaszufuhr. Die besondere Bedeutung des Neigungssensors 23 liegt darin, dass beim Kippen des Fahrzeugs bzw. Fahrzeuganhängers Gas im flüssigen Zustand aus der Gasflasche in das Gasleitungssystem eintreten kann. Dies wird durch eine entsprechende Kippmeldung des Neigungssensors 23 an die Elektronikeinheit 21 und eine von dieser ausgelösten Sperrung der Gaszufuhr verhindert.

Das elektromagnetische Gasventil 20 bildet zusammen mit der Elektronikeinheit 21 und den Sensoren 22 und 23 die Sicherheitsabsperreinrichtung 19 der in FIG 2 schematisch dargestellten Flüssiggas-Anlage 10.

Die Elektronikeinheit 21 ist ferner über weitere elektrische Verbindungen 25 mit einem manuell zu bedienenden Schalter 24 verbunden. Dieser Schalter 24 kann beispielsweise im Innenraum des Fahrzeugs bzw. Fahrzeuganhängers angebracht sein. Mit diesem Schalter 24 lässt sich die Gasversorgung gewollt manuell abschalten. Hierzu gibt der Schalter 24 nach entsprechender Betätigung ein Signal an die Elektronikeinheit 21 ab, wodurch die Elektronikeinheit veranlasst wird, das elektromagnetische Gasventil 20 derart anzusteuern, dass die Gaszufuhr absperrt wird. Damit kann die Gasabsperrung direkt an der Gasflasche 11 erfolgen und doch vom Fahrzeuginnenraum aus, d.h. ferngesteuert, veranlasst werden.

Selbstverständlich können an die in FIG 2 dargestellte Elektronikeinheit 21 noch weitere Sensoren, beispielsweise zusätzliche Beschleunigungs- und/oder Neigungssensoren, aber auch Gassensoren und/oder Rauchmelder, angeschlossen werden und Signale für ein Auslösen der Sicherheitsabsperrung liefern.

Insgesamt wird somit eine Sicherheitsabsperreinrichtung für eine Flüssiggas-Anlage für Fahrzeuge und/oder Fahrzeuganhänger und eine entsprechende Flüssiggas-Anlage sowie ein dazugehöriges Verfahren angegeben, mit der sich im Falle eines Unfalls die ungewollten Freisetzung von Gas sicher, insbesondere unabhängig von Volumenströmen im Gasleitungssystem, verhindern lässt.

### Bezugszeichenliste

- 10: Flüssiggas-Anlage
- 11: Gasvorratsbehälter, Gasflasche
- 11a: Flaschenventil
- 12: Gashochdruckschlauch
- 13: Schlauchbruchsicherung
- 14: Druckregler
- 15: Strömungswächter
- 16: Testpunkt
- 17: Gasverbraucher
- 18: Gasverbindungen, Gasleitungen, Gasschläuche (schematisch)
- 19: Sicherheitsabsperreinrichtung
- 20: Elektromagnetisches Gasventil
- 21: Elektronikeinheit
- 22: Beschleunigungssensor
- 23: Neigungssensor
- 24: Schalter
- 25: elektrische Verbindungen (schematisch)

## Patentansprüche

1. Flüssiggas-Anlage (10) für Fahrzeuge und/oder Fahrzeuganhänger,
a) bei der ein oder mehrere Gasvorratsbehälter (11) über eine oder mehrere Gasleitungen (18) mit einem oder mehreren Gasverbrauchern (17) verbunden oder verbindbar sind,
b) mit einer Gas-Sicherheitsabsperreinrichtung (19) zur Vermeidung einer ungewollten Freisetzung von Gas im Falle eines Unfalles des Fahrzeugs und/oder Fahrzeuganhängers, umfassend
c1) ein elektromagnetisches Gasventil (20) zur Gaszufuhr-Absperrung,
c2) eine Elektronikeinheit (21) zur Ansteuerung des elektromagnetischen Gasventils (21), und
c3) mindestens einen Sensor (22, 23) zur Ermittlung eines Unfalls des Fahrzeugs und/oder Fahrzeuganhängers, wobei der Sensor zur Weitergabe einer Unfallmeldung mit der Elektronikeinheit verbunden ist, **dadurch gekennzeichnet, daß** die Flüssiggas-Anlage einen Druckregler (14) enthält und daß das elektromagnetische Gasventil (20) gasströmungstechnisch dem Druckregler (14) nachgeschaltet oder vorgeschaltet ist.

2. Flüssiggas-Anlage (10) nach Anspruch 1,
**dadurch gekennzeichnet, dass**
das elektromagnetische Gasventil (20) bei fehlender elektrischer Energieversorgung die Gaszufuhr in der Flüssiggas-Anlage (10) absperrt.

3. Flüssiggas-Anlage (10) nach einem der Ansprüche 1 oder 2,
**dadurch gekennzeichnet, dass**
das elektromagnetische Gasventil (20) direkt am Druckregler (14) angebracht ist.

4. Flüssiggas-Anlage (10) nach einem der Ansprüche 1 bis 3,
**dadurch gekennzeichnet, dass**
der Druckregler (14) direkt an einem Gasvorratsbehälter (11) angebracht oder anbringbar ist.

5. Flüssiggas-Anlage (10) nach einem der vorhergehenden Ansprüche,
**dadurch gekennzeichnet, dass**
das elektromagnetische Gasventil (20) direkt an einem Gasvorratsbehälter (11) angebracht oder anbringbar ist.

6. Flüssiggas-Anlage (10) nach einem der vorhergehenden Ansprüche,
**dadurch gekennzeichnet, dass**
das elektromagnetische Gasventil (20) direkt am Druckregler (14) angebracht ist.

7. Flüssiggas-Anlage (10) nach einem der vorhergehenden Ansprüche,
**dadurch gekennzeichnet, dass**
das elektromagnetische Gasventil (20) an eine in das Fahrzeug und/oder den Fahrzeuganhänger eingebaute Batterie angeschlossen oder anschließbar ist.

8. Flüssiggas-Anlage (10) nach einem der vorhergehenden Ansprüche,
**dadurch gekennzeichnet, dass**
das der Sensor ein Beschleunigungssensor (22) und/oder ein Neigungssensor (23) ist.

9. Flüssiggas-Anlage (10) nach einem der vorhergehenden Ansprüche,
**dadurch gekennzeichnet, dass**
ein vorzugsweise im Inneren des Fahrzeugs oder Fahrzeuganhängers angeordneter Schalter (24) zum manuellen Abschalten der Gasversorgung vorgesehen ist.

10. Flüssiggas-Anlage (10) nach einem der vorhergehenden Ansprüche,
**dadurch gekennzeichnet, dass**
zusätzlich ein oder mehrere weitere Sensoren vorgesehen sind, insbesondere Gassensoren und/oder Rauchmelder, die weitere Gefahrensituationen ermitteln, insbesondere Gasaustritt und/oder Brand im Fahrzeug und/oder Fahrzeuganhänger, wobei die Sensoren zur Weitergabe einer Gefahrmeldung mit der Elektronikeinheit (21) verbunden sind.

11. Flüssiggas-Anlage (10) nach einem der vorhergehenden Ansprüche,
**dadurch gekennzeichnet, dass**
Elektronikeinheit (21) und/oder Sensoren (22, 23) so ausgelegt sind, dass im Fehlerfall automatisch das elektromagnetische Gasventil (20) die Gaszufuhr absperrt.

12. Verfahren zur Sicherheitsabsperrung einer Flüssiggas-Anlage (10) für Fahrzeuge und/oder Fahrzeuganhänger, zur Vermeidung einer ungewollten Freisetzung von Gas im Falle eines Unfalles des Fahrzeugs und/oder Fahrzeuganhängers, bei dem
a) ein Unfall des Fahrzeugs und/oder Fahrzeuganhängers mit mindestens einem Sensor (22, 23) ermittelt wird,
b) der Sensor (22, 23) den Unfall an eine Elektronikeinheit (21) meldet,
c) die Elektronikeinheit (21) im Fall einer Unfallmeldung ein in die Flüssiggas-Anlage (10) integriertes elektromagnetischen Gasventil (20) derart ansteuert, dass das Gasventil (20) einen Gasaustritt aus einem an die Flüssiggas-Anlage (10) angeschlossenen Gasvorratsbehälter absperrt, **dadurch gekennzeichnet daß** das elektromagnetische Gasventil (20) gasströmungstechnisch einem Druckregler (14) nachgeschaltet oder vorgeschaltet ist.

13. Verfahren nach Anspruch 12, bei dem
a) das elektromagnetische Gasventil (20) derart ausgelegt ist, dass es bei fehlender elektrischer Energie die Gaszufuhr in der Flüssiggas-Anlage (10) absperrt, und
b) die Elektronikeinheit (21) im Falle einer Unfallmeldung die elektrische Energieversorgung des elektromagnetischen Gasventils (20) unterbricht.

## Claims

1. A liquefied gas system (10) for vehicles and/or vehicle trailers,
a) in which one or more gas storage tanks (11) are connected or connectable to one or more gas consumers (17) via one or more gas pipes (18),
b) including a gas safety shutoff means (19) for preventing gas from unintentionally being released in case of accident of the vehicle and/or vehicle trailer, comprising
c1) an electromagnetic gas valve (20) for blocking the gas supply,
c2) an electronics unit (21) for controlling the electromagnetic gas valve (20), and
c3) at least one sensor (22, 23) for detecting an accident of the vehicle and/or vehicle trailer, wherein the sensor is in communication with the electronics unit for transmitting an accident notification,
**characterized in that** the liquefied gas system contains a pressure regulator (14), and that the electromagnetic gas valve (20) is connected downstream or upstream of the pressure regulator (14) with respect to the gas flow.

2. The liquefied gas system (10) according to claim 1,
**characterized in that**
the electromagnetic gas valve (20) blocks the gas supply in the liquefied gas system (10) in the absence of electric energy supply.

3. The liquefied gas system (10) according to any one of claims 1 or 2,
**characterized in that**
the electromagnetic gas valve (20) is mounted directly on the pressure regulator (14).

4. The liquefied gas system (10) according to any one of claims 1 to 3,
**characterized in that**
the pressure regulator (14) is mounted or mountable directly on a gas storage tank (11).

5. The liquefied gas system (10) according to any one of the preceding claims, **characterized in that**
the electromagnetic gas valve (20) is mounted or mountable directly on a gas storage tank (11).

6. The liquefied gas system (10) according to any one of the preceding claims,
**characterized in that**
the electromagnetic gas valve (20) is mounted directly on the pressure regulator (14).

7. The liquefied gas system (10) according to any one of the preceding claims,
**characterized in that**
the electromagnetic gas valve (20) is connected or connectable to a battery installed in the vehicle and/or vehicle trailer.

8. The liquefied gas system (10) according to any one of the preceding claims,
**characterized in that**
the sensor is an acceleration sensor (22) and/or an inclination sensor (23).

9. The liquefied gas system (10) according to any one of the preceding claims,
**characterized in that**
a switch (24) for manually switching off the gas supply is preferably provided inside the vehicle or vehicle trailer.

10. The liquefied gas system (10) according to any one of the preceding claims,
**characterized in that**
one or more further sensors, e.g. gas sensors and/or smoke detectors, are provided in addition, which detect further hazard situations such as gas leakage and/or fire in the vehicle and/or vehicle trailer, wherein the sensors are in communication with the electronics unit (21) for transmitting a hazard notification.

11. The liquefied gas system (10) according to any one of the preceding claims,
**characterized in that**
the electronics unit (21) and/or sensors (22, 23) are configured such that the electromagnetic gas valve (20) automatically blocks the gas supply in case of failure.

12. A method for safely shutting off a liquefied gas system (10) for vehicles and/or vehicle trailers for preventing gas from unintentionally being released in case of accident of the vehicle and/or vehicle trailer, in which
a) an accident of the vehicle and/or vehicle trailer is detected by means of at least one sensor (22, 23),
b) the sensor (22, 23) notifies an electronics unit (21) about the accident,
c) in case of an accident notification, the electronics unit (21) controls an electromagnetic gas valve (20) integrated into the liquefied gas system (10) such that the gas valve (20) blocks gas from exiting a gas storage tank connected to the liquefied gas system (10),
**characterized in that** the electromagnetic gas valve (20) is connected downstream or upstream of a pressure regulator (14) with respect to the gas flow.

13. The method according to claim 12, in which
a) the electromagnetic gas valve (20) is configured such that it blocks the gas supply in the liquefied gas system (10) in the absence of electrical energy, and
b) the electronics unit (21) interrupts the electrical energy supply to the electromagnetic gas valve (20) in case of an accident notification.

## Revendications

1. Installation de gaz liquide (10) pour véhicules et/ou remorques de véhicule,
a) où un ou plusieurs réservoirs de gaz (11) sont reliés ou peuvent être reliés à un ou plusieurs consommateurs de gaz (17) via une ou plusieurs conduites de gaz (18),
b) incluant un dispositif d'arrêt de sécurité de gaz (19) pour éviter un dégagement intempestif de gaz en cas d'accident du véhicule et/ou de la remorque de véhicule, comprenant
c1) une vanne de gaz électromagnétique (20) pour l'arrêt de l'arrivée de gaz,
c2) une unité électronique (21) pour la commande de la vanne de gaz électromagnétique (20), et
c3) au moins un capteur (22, 23) pour déterminer un accident du véhicule et/ou de la remorque de véhicule, le capteur étant relié à l'unité électronique pour transmettre une signalisation d'accident,
**caractérisée en ce que** l'installation de gaz liquide contient un régulateur de pression (14) et **en ce que** la vanne de gaz électromagnétique (20) est placée en aval ou en amont du régulateur de pression (14) en termes d'écoulement de gaz.

2. Installation de gaz liquide (10) selon la revendication 1,
**caractérisée en ce que**
la vanne de gaz électromagnétique (20) arrête l'arrivée de gaz dans l'installation de gaz liquide (10) en cas d'absence d'alimentation en énergie électrique.

3. Installation de gaz liquide (10) selon l'une des revendications 1 ou 2,
**caractérisée en ce que**
la vanne de gaz électromagnétique (20) est disposée directement au niveau du régulateur de pression (14).

4. Installation de gaz liquide (10) selon l'une des revendications 1 à 3,
**caractérisée en ce que**
le régulateur de pression (14) est disposé ou peut être disposé directement au niveau d'un réservoir de gaz (11).

5. Installation de gaz liquide (10) selon l'une des revendications précédentes,
**caractérisée en ce que**
la vanne de gaz électromagnétique (20) est disposée ou peut être disposée directement au niveau d'un réservoir de gaz (11).

6. Installation de gaz liquide (10) selon l'une des revendications précédentes,
**caractérisée en ce que**
la vanne de gaz électromagnétique (20) est disposée directement au niveau du régulateur de pression (14).

7. Installation de gaz liquide (10) selon l'une des revendications précédentes,
**caractérisée en ce que**
la vanne de gaz électromagnétique (20) est raccordée ou peut être raccordée à une batterie installée dans le véhicule et/ou dans la remorque de véhicule.

8. Installation de gaz liquide (10) selon l'une des revendications précédentes,
**caractérisée en ce que**
le capteur est un capteur d'accélération (22) et/ou un capteur d'inclinaison (23).

9. Installation de gaz liquide (10) selon l'une des revendications précédentes,
**caractérisée en ce que**
un interrupteur (24) disposé de préférence à l'intérieur du véhicule ou de la remorque de véhicule est prévu pour couper manuellement l'alimentation en gaz.

10. Installation de gaz liquide (10) selon l'une des revendications précédentes,
**caractérisée en ce que**
un ou plusieurs capteurs supplémentaires sont prévus en plus, en particulier des capteurs de gaz et/ou des détecteurs de fumée, lesquels déterminent des situations de danger supplémentaires, en particulier un échappement de gaz et/ou un incendie dans le véhicule et/ou la remorque de véhicule, les capteurs étant reliés à l'unité électronique (21) pour transmettre une signalisation de danger.

11. Installation de gaz liquide (10) selon l'une des revendications précédentes,
**caractérisée en ce que**
l'unité électronique (21) et/ou les capteurs (22, 23) sont conçus de telle sorte que la vanne de gaz électromagnétique (20) arrête automatiquement l'arrivée de gaz en cas d'erreur.

12. Procédé pour l'arrêt de sécurité d'une installation de gaz liquide (10) pour véhicules et/ou remorques de véhicule, pour éviter un dégagement intempestif de gaz en cas d'accident du véhicule et/ou de la remorque de véhicule, où
a) un accident du véhicule et/ou de la remorque de véhicule est déterminé au moyen d'au moins un capteur (22, 23),
b) le capteur (22, 23) signale l'accident à une unité électronique (21),
c) en cas de signalisation d'accident, l'unité électronique (21) commande une vanne de gaz électromagnétique (20) intégrée dans l'installation de gaz liquide (10) de telle sorte que la vanne de gaz (20) arrête un échappement de gaz provenant d'un réservoir de gaz raccordé à l'installation de gaz liquide (10), **caractérisé en ce que** la vanne de gaz électromagnétique (20) est placée en aval ou en amont d'un régulateur de pression (14) en termes d'écoulement de gaz.

13. Procédé selon la revendication 12, où
a) la vanne de gaz électromagnétique (20) est conçue de telle sorte qu'elle arrête l'arrivée de gaz dans l'installation de gaz liquide (10) en cas d'absence d'énergie électrique, et
b) l'unité électronique (21) interrompt l'alimentation en énergie électrique de la vanne de gaz électromagnétique (20) en cas de signalisation d'accident.
